# EUROPEAN PATENT APPLICATION

(11) **EP 4 541 957 A1**
(43) Date of publication of application: **23.04.2025**
(21) Application number: 24206898.9
(22) Date of filing: 16.10.2024
(51) Int. Cl.: D01F 8/06, C08J 11/06, E01C 13/08

(54) **ARTIFICIAL TURF MONOFILAMENT AND METHOD FOR PRODUCING AN ARTIFICIAL TURF MONOFILAMENT**

(30) Priority: 20.10.2023 EP 23204889
(71) Applicant: Victoria Holdco B.V., 7122 AH Aalten (NL)
(72) Inventor: DECORTE, Davida, 7122 AH Aalten (NL); VAN VOORST, Gerjan, 7711 VW Nieuwleusen (NL); MEURRENS, Jelle, 32369 Rahden (DE)
(74) Representative: CPW GmbH

(57) **Abstract**

The application pertains to an artificial turf monofilament comprising a sheath comprising a virgin polyolefin polymer, a core comprising recycled polyolefin polymer obtained from recycled artificial turf. Furthermore, the application pertains to an artificial turf comprising said monofilament as well as a process for manufacturing said monofilament.

## Description

The present application pertains to an artificial turf monofilament, artificial turf comprising said artificial turf monofilament and a method for producing said artificial turf monofilament.

Artificial turf has become a more and more important material especially for the coverage of sporting courts such as football courts, soccer courts, tennis courts or courts for other kinds of sports which are traditionally carried out on grass. The advantage of artificial turf is a higher resistance against environmental influences such as dryness during summer or cold conditions during winter. For this reason, artificial turf is an option especially polar regions with short vegetation periods where damages in the grass cannot be compensated by natural growth in due time but also in very dry regions where artificial turf may help to save water ressources and is e.g. not destroyed by locust swarms. But also in regions with less extreme climate, artificial turf becomes more and more popular as it provides homogeneous and reproducible mechanical properties and also requires less care than conventional grass as it is e.g. not necessary to water, cut and fertilize artificial turf.

Apart from coverages for sports courts, artificial turf has also become very popular as ground coverage e.g. in private gardens instead of natural grass for the same reasons.

Artificial turf typically consists of a sheet-like fabric forming the so-called primary backing with pile yarns tufted therein with the pile yarns playing the role of the stems of natural grass. Furthermore, the artificial turf may comprise further layers of sheet-like material and/or fillings with may influence the areal weight and thus the stability against wrinkles but also the damping effect of the artificial turf.

The pile yarns (also called "tufting yarns") tufted into the primary backing are so-called "artificial turf yarns" which are typically monofilaments which are also called "artificial turf monofilaments".

A big disadvantage of current artificial turf is its bad life-cycle assessment. Artificial turf consists of synthetic polymers and was typically disposed by depositing or burning after its end of life.

During the past years, recycling of artificial turf has become more and more important also due to certain legal obligations in many countries. However, artificial turf is a material that has turned out to be difficult to recycle. During the life cycle of artificial turf, the material is exposed to much higher stress than other polymeric materials as it is totally exposed to environmental influences such as heat during summer - not only due to hot air but also due to direct sun radiation which may cause heating which is much above the air temperature. Apart from this influence of infrared sun radiation, artificial turf is also exposed to strong and direct visible and ultraviolet (UV) radiation which may lead to chemical degradation through excitation processes. This means that the polymeric materials of artificial turf are typically to a much higher degree degraded as it is the case for other polymeric materials with a comparable lifetime but which are less exposed to environmental conditions. Apart from polymer degradation, end-of-life artificial turf is also strongly soiled by dirt, soil, sand or gravel which both come from the underground the artificial turf is placed on and which is carried onto the artificial turf by the shoes of the people walking thereon. An important contribution to the soiling of the artificial turf is the so-called infill which is a component which is provided to the artificial turf after it has been laid down on the ground. The purpose of the infill is to provide the artificial turf with padding properties comparable to the ones of natural grass. The infill may be sand or particles of ground end-of-life tires. Also other material, natural or synthetic, such as ground olive pits, cork, ethylenepropylene-diene monomer rubber (EPDM) materials etc. may be used as infill.

Typically, the infill has to be refilled and/or renewed several times during the lifetime of the artificial turf as it is loosely provided between the piles of the artificial turf.

Furthermore, the fact that artificial turf is dyed and/or pigmented (typically with green color) makes it difficult to recycle to higher-valued products as it already carries colorants.

For these reasons, recycling of artificial turf typically is a so-called "down cycling" which means that from recycled artificial turf only products with a lower value can be produced such as e.g. park benches.

It is thus the object of the present application to provide an artificial turf monofilament which has a better life-cycle assessment than artificial turf monofilament yarns of the prior art.

It has now surprisingly been found that the object is solved by an artificial turf monofilament comprising a sheath comprising a virgin polyolefin polymer, a core comprising recycled polyolefin polymer obtained from recycled plastic items such as artificial turf.

A filament according to the present application is an object which has a length which is at least 1000 times its apparent diameter. Throughout this application, the apparent diameter is understood as a quantity which is calculated from the linear density of the monofilament and the density of the material of the monofilament, which allow for calculation of the volume of a certain length of the monofilament. The apparent diameter is then calculated from the length by assuming a circular cross section.

Filaments can be interpreted as a special kind of fibers which is characterized by its length. The length of a filament may be several hundred or even several thousand meters. It is possible that the content of a whole yarn bobbin consists of one single filament. A monofilament is a filament which is produced, transported and handled on its own and not with other filaments in parallel.

The monofilaments according to the present application may have cross section known to the person skilled in the art such as circular, oval, oblong, polygonal such as trigonal, tetragonal, pentagonal, hexagonal, heptagonal or octagonal or trilobal. In an embodiment, the monofilament has a hexagonal diamond form or the form of a propeller with two, three or four blades.

In an embodiment, the shape of the core of the monofilament differs from the shape of the monofilament as a whole which thus means that the outer form of the cross section of the monofilament is determined by the sheath.

In such embodiments, the core may have an essentially rectangular, quadratic, oval, circular, oblong or triangular shape wherein the edges are not always smooth but can also have a fluted, corrugated, ribbed or saw-tooth-like shape or they may comprise indentations. In the following, the terms fluted, corrugated, ribbed, saw-tooth-like and "comprising indentations" will be used synonymously. This shape increases the surface of the core and thus improves adhesion between the material of the core and the material of the shape.

The skilled person knows that the corrugated shape of the core may be combined with any shape of the sheath such that the cross section of the monofilament may be circular, oval, oblong, polygonal such as trigonal, tetragonal, pentagonal, hexagonal, hexagonal-diamond shaped, heptagonal or octagonal, trilobal or propeller-shaped.

Furthermore, it has surprisingly been found that the corrugated shape of the core also improves the adhesion between the core and the sheath when the core does not comprise a recycled polymeric material but is made from virgin polymeric material. Furthermore, it has been found by the inventors that a corrugated shape of the core also improves adhesion between the core and the sheath also when either the core and/or the sheath do not comprise polyolefin polymers but polyamides such as polyamide-6, polyamide-6,6, polyam ide-6,10, polyam ide-4,10, polyamide-10 or polyamide 11, polyesters such as polyethylene terephthalate (PET), polytrimethylene terephthalate (PTT), polybutylene terephthalate (PBT), polyethylene naphthalate (PEN), polylactide (PLA) or polycaprolactone. It is furthermore understood that all other embodiments of the present application may be combined with the corrugated core.

The sheath of a filament according to the present application is the outer part of the filament which is visually and haptically exposed to the user. It is thus the sheath of the filaments which is in direct physical contact with people, animals or items that interact with the monofilament according to the present application. The sheath according to the present application covers the whole surface of the monofilament. In an embodiment, the sheath may have a thickness of at least 10, 20, 30, 40, 40, 100 or 200 micron

In an embodiment, the sheath may have a thickness of at most 30, 40, 50, 100, 200 or 500 micron

The sheath may have the character of a layer or coverage on the core. In contrast to the core, which has an apparent diameter the sheath has a thickness.

A typical functionality of the sheath is to conceal the core from exposure to a user e.g. for hygienic reasons or for the sake of a good aesthetic appearance of the monofilament or a comfortable feel, to fulfil to the requirements of the sport characteristics the yarn is made for. The sport characteristics of the artificial turf depend on the kind of sports the artificial turf is used for and includes properties such as resilience, tuft-lock, friction towards human skin, clothing and shoe soles or fiber-pitch as well as the ball roll behavior thereon. Tuft-lock means the force that is necessary to pull a tuft out of the finalized artificial turf.

Thus, a sheath may cover the core which has e.g. an unpleasant color or an uncomfortable hand. Furthermore, the sheath may serve as a strengthening for the core if the core is e.g. made of a material with a lower strength which is often the case for recycled materials. Unpleasant colors are also a frequent characteristic of recycled materials. In such case the sheath, which covers the unpleasantly colored core, can be colored by using proper dye material like colorants or pigments.

The core of the filament is the inner part of the filament. In an embodiment, the mass of material comprised in the core is about the same as the mass of material comprised in the sheath. In an embodiment, the mass of material comprised in the core is larger than the mass of material comprised in the sheath. In an embodiment, the core comprises at least two times as much material as the sheath. In an embodiment, the core comprises at least five times as much material as the sheath. In an embodiment, the sheath comprises 10, 25, 30, 35, 50 or 70, 90 mass-% of the material of the monofilament. In an embodiment, the core comprises 10, 30, 35, 50 or 70, 90 mass-% of the material of the monofilament. As the core is completely covered by the sheath, the core may comprise materials which are undesired at the surface of the multifilament for hygienic, aesthetic or haptic reasons.

In an embodiment, the core has an apparent diameter of at least 10, 40, 100, 150 or 200 micron.

In an embodiment, the core has an apparent diameter of at most 100, 150, 200, 300, 500 or 700 micron

By the core-sheath-shape of the monofilament, different materials with different advantages may be combined. The core material may e.g. be chosen for its mechanical stability, its cheapness and/or its good life cycle assessment. The sheath material may e.g. be chosen for its comfortable hand, sport characteristics, attractive color and/or its hygienic harmlessness. The skilled person knows that all criteria mentioned in this context are examples and that all criteria may be combined with each other.

In an embodiment, the monofilament has a linear density of at least 200, 300, 400, 500, 1000 or 1500 dtex.

In an embodiment, the monofilament has a linear density of at most 500, 700, 1000, 1500, 2000, 2500 or 3000 dtex.

Both the sheath and the core of the monofilament according to the present application comprise polyolefin polymers. Polyolefin polymers according to the present application are polymers which essentially consist of olefinic monomers such as ethylene, propylene, butylene, isobutylene or methylpentene. The most prominent examples are polyethylene, polypropylene, polybutylene, polyisobutylene or polymethylpentene. Also copolymers of ethylene, propylene, butylene, isobutylene or methylpentene are included as well as mixtures of the mentioned polymers.

According to the present application, the term polyethylene is used for all kinds of polyethylene known to the person skilled in the art such as low-density polyethylene (LDPE), linear low density polyethylene (LLDPE), high-density polyethylene (HDPE) or ultra-high molecular weight polyethylene (UHMWPE): In general, the term polyolefin according to the present application means thermoplastic polymers, i.e. polymers which melt and become formable by exposure to heat. Polymers which are not included in polyolefins according to the present application are polymers which do not have thermoplastic properties, also when they are from olefinic monomers.

In an embodiment, a part of the polyolefin polymers according to the present application or all polyolefin polymers according to the present application are free of compatibilizers, surfactants or detergents.

In an embodiment, a part of the polyolefin polymers according to the present application or all polyolefin polymers according to the present application are homogeneous polymers which means that they essentially do not comprise inclusions of other polymers apart from unwanted dirt particles.

A virgin polymer according to the present application is a polymer that has been produced by polymerization right before use, i.e. which has not been used in a different product prior to being used according to the present application.

A recycled polymer according to the present application is a polymer which has been used for another purpose before having been used according to the present application and which has not been subjected to polymerization and/or depolymerization in between the different uses but which has only been treated physically e.g. by cutting, bending, melting, pressing, deforming, extruding or any combination thereof.

Typically, a recycled polymer is obtained from the re-use of waste items of said polymer. The waste used as source for the recycled polyolefin polymer according to the present application is not particularly limited. However, in an embodiment, the waste used to obtain the recycled polyolefin polymer is end-of-life artificial turf. In an embodiment, the virgin polyolefin polymer comprised in the sheath of the multifilament is polyethylene. A big advantage of polyethylene is its chemical inertness and its comfortable feel which is of special importance for artificial turf as coverage for sports courts.

In an embodiment, the polyolefin polymer comprised in the core comprises polyethylene, polypropylene or a mixture of polyethylene and polypropylene. The ratio between polyethylene and polypropylene is not particularly limited, however in an embodiment, the ratio is 85% - 15% but can also be 50%-50% or 15% - 85% In an embodiment, the polyolefin polymer in the sheath has a melt-flow index of at least 1, 2, 2.5, 3.5 or 4 g/(10 min)

In an embodiment, the polyolefin polymer in the sheath has a melt-flow index of at most 2.5, 3.5, 5, 5 or15 g/(10 min).

In an embodiment, the polyolefin polymer in the core has a melt-flow index of at least 0,5,1, 2, 2.5, 3.5 or 4 g/(10 min).

In an embodiment, the polyolefin polymer in the core has a melt-flow index of at most 2.5, 3.5, 5, 5, 15 or 20 g/(10 min).

The melt flow index is measured according to ISO 1133 at a temperature of 190°C and a load of 2.16 kg.

It is observed that the recycled polyolefin polymer shows a higher so-called filter pressure value during the extrusion process as compared to virgin polymer.

The filter pressure value is measured in a similar manner as disclosed in the article "Filter pressure Value Test (FPV test) - a new standard to examine master batches, white and carbon black colorants" by Dr. Bernd Jakob of Thermo Fisher Scientific 2007-03.

In order to measure the filter pressure value according to the present application, the procedure disclosed in the mentioned reference is adapted in such a manner that the extruder is set to a constant flow of 50 cm³/min and the filter is built up on a 35 mesh carrier screen on a braker plate with 61 holes of 2 mm diameter. The screen is set on 100 mesh. The pressure before the pump is set to 10 bar. The pressure after the pump and before the filter is measured every minute. The pressure after the filter is 1 bar, i.e. after the filter, the material is released from the device. On the pump, the temperature is kept at 216°C.

The device is preset with PP homopolymer with a melt flow index of 20. Directly after the PP homopolymer, the polymer to be tested is fed into the extruder. The measurement is started as soon as the pressure after the pump has increased to 10 bars. The FPV is determined as the pressure difference between the pressure after the pump after 2 minutes and after 12 minutes divided by 10 minutes. Thus, the FPV is given in units of bar/min.

It has now been found that the FPV of virgin polymer is negligible while the FPV of the recycled polymer is higher. In an embodiment, the FPV of the recycled polymer is in the range of 0.2 to 5 bar/min. In an embodiment, the FPV is at least 0.5 bar/min, 1 bar/min, at least 1.5 bar/min or at least 2 bar/min. In an embodiment, the FPV is at most 1 bar/min, at most 2 bar/min, at most 2.5 bar/min, at most 3 bar/min or at most 4 bar/min, or at most 5 bar/min, or at most 10 bar/min, or at most 15 bar/min, or at most 20 bar/min.

Another characteristic of recycled polymer and difference over virgin polymer is its behavior in the oxidation induction time test according to ASTM D3895 and/or ISO 11357. Recycled polymers show oxidation induction times lower than virgin polymers. In an embodiment, the oxidation induction time of the recycled polymer is at most 10 minutes, at most 5 minutes, at most 3 minutes, at most 2 minutes, at most one minute or less than one minute.

Virgin polymers on the contrary show oxidation induction times of at least 15 minutes, at least 20 minutes, at least 25 minutes or at least 30 minutes.

A sheath layer comprising virgin polymer can be applied to protect the core material from oxidative degradation. In an embodiment, protection against oxidative degeneration is further supported by antioxidants and/or UV protection agents in the sheath and/or in the core material.

The filter pressure value and the oxidation induction test are independent indicators for the recycled character of the polymer. This means that a polymer which shows a high filter pressure value but a long oxidation induction time is a recycled polymer according to the present application. A polymer that shows a short oxidation induction time but a low filter pressure value is also a recycled polymer according to the present application.

Without being bound by theory, it is assumed that the high filter pressure value of recycled polymers can be caused either by particular impurities which may be comprised in the recycled polymer or by deforming of the polymer or a combination thereof. It is further assumed that the short oxidation induction time of recycled polymer is caused by the fact that protection additives that have been added to the polymer during its production process such as antioxidants or UV protection agents have been consumed during the lifetime of the polymer due to contact with water, air and radiation. The oxidation induction time thus indicates to which extent the polymer is protected against oxidation via protective additives, additives the polymer supplier always adds to the virgin material to give virgin materials a base protection against future heat treatments as for example extrusion and injection molding processes. Typically, in recycled polymers, especially in end-of-life artificial turf, the protective additives are consumed either in total or to a large extent. Thus, by its presence, virgin and recycled polymers can be distinguished.

The advantage of a mixture of polyethylene and polypropylene is that it is easily and economically obtainable by recycling of waste items, especially end-of-life artificial turf as artificial turf products often comprise both polyethylene and polypropylene.

In an embodiment, the core of the monofilament comprises the recycled polyolefin polymer as its only polymeric component. In an embodiment, the core has a content of recycled polymer of 50 mass-%, 60 mass-%, 70 mass-%, 80 mass-% or 90 mass-% of its polymeric component. This leads to an improved life-cycle assessment as the use of virgin polymer and thus the use of fossil resources is reduced.

Typically, the material of the end-of-life artificial turf undergoes a cleaning procedure during the recycling process which may include grinding steps, sorting steps by e.g. flotation, sieving or winnowing and filtering of the molten polymer. Purification processes have been optimized during recent years, however, it is still possible, that small amounts of impurities may be comprised in the core material. In an embodiment, the core of the monofilament may thus comprise fractions of backing or coating materials which had been used as coats of the end-of-life artificial turf that has been recycled, such as styrene-butadiene, carboxylated styrene-butadiene (X-SBR) or polyurethane. The core may also comprise other materials that originate from the end-of-life artificial turf that has been recycled such as oxidation or radiation protection agents, pigments, dyes or any other colorants or other additives known to the person skilled in the art. Furthermore, also small amounts of infill materials may be comprised in the core material. It has surprisingly been found that small amounts of infill materials serve as a filler and can increase adhesion between the core component and the sheath component. In an embodiment, the core may comprise additives to improve the mechanical, chemical or haptic properties of the monofilaments. Such additives may be UV-protective additives which prevent the polymer from degradation by UV radiation. Possible UV-protective additives are e.g. dyes from the so-called HALS group where HALS stands for "hindered amine light stabilizers". Especially as artificial turf is frequently exposed to sunlight, UV-protectors are advantageous additives. Other possible additives may be antioxidants which are able to reduce e.g. reactive oxygen species within the polymeric material which may be formed by light absorption. Typical antioxidants known to the skilled person are Pentaerythritol tetrakis(3,5-di-tert-butyl-4-hydroxyhydrocinnamate) or phosphites. Other possible additives are pigments and/or colorants. As it is at least from recycled sources, the core material may already comprise dyes and/or colorants which originate from the recycled items. Together with the products of degradation processes due to the age of the polymer, this may lead to an unpleasant greyish or brownish color of the core which may be compensated by additional dyes and/or pigments.

A special class of dyes which may be comprised in the core are optical brighteners which not only absorb UV light but also reflect it as visible light which leads to a brighter appearance of the core material.

In an embodiment, the core component comprises chalk or titanium dioxide as white pigment with the purpose of giving it a brighter appearance.

The present application further pertains to an artificial turf comprising at least one monofilament according to the present application.

The artificial turf according to the present application may be a woven, a knitted or a tufted artificial turf.

Knitted artificial turf is a voluminous knitted fabric The monofilament according to the present application may be comprised in a knitted artificial turf on its own or together with other kinds of fibers, filaments, threads or yarns.

Woven artificial turf is a woven fabric comprising protruding loops or cut piles of filaments-which have a similar characteristic than the stems of natural grass. In a woven artificial turf, the monofilament according to the present application may be comprised on its own or together with other fibers, filaments, yarns or threads. The monofilament according to the present application may be comprised in the woven artificial turf as a part of the warp, as part of the weft, as part of the pile or as part of any combination of these components. Also as part of the pile which is a third component.

A tufted artificial turf necessarily comprises a first sheet-like material as a so-called primary backing. The first sheet-like material may be a woven fabric, a knitted fabric, a non-woven fabric or a foil. Into the first sheet-like material a yarn, a fiber or a filament is tufted to form a pile on a first side and backstitches on a second side of the first sheet-like material.

The primary backing may be of any suitable material known to the person skilled in the art. Possible materials are polyesters such as polyethylene terephthalate, polyamides such as polyamide-6 or polyamide-6,6 or polyolefins such as polyolefin where the expression polyolefin is to be understood in the broad sense defined earlier in the present application.

The tuft may be fixed to the primary backing by a polymer coat which may be applied to the second side of the primary backing. The polymer coat may be of any material known to the person skilled in the art, namely e.g. of styrene-butadiene latex. A disadvantage of a polymer coat can be that polymer coats can provide the tufted artificial turf with an extra material which forms an obstacle for recycling as long as the chemical binder is from a different polymer family than the secondary backing, the primary backing and/or the yarns, fibers and/or filaments tufted into the primary backing. Especially styrene-butadiene latex can be problematic in this sense as it does not have thermoplastic properties. In an embodiment, a thermoplastic coat is used which may be based on a polyolefin polymer.

The backstitches may also be fixed to the primary backing by thermal bonding which means that after tufting, the second side of the primary backing is exposed to heat in order to soften or partially melt the backstitches, the primary backing or parts thereof to provide them with sticky properties and adhere them together.

In an embodiment, the yarns, fibers or filaments tufted into the primary backing, the primary backing itself and the coat, if present, comprise polyolefin polymers or comprise polyolefin polymers as only polymeric component. In an embodiment, the yarns, fibers or filaments tufted into the primary backing, the primary backing itself and the coat, if present, comprise polyolefin polymers or comprise polyethylene, polypropylene, copolymers of ethylene and propylene and/or mixtures thereof as only polymeric component.

In general, a reduction of the number of polymeric components in a material improves recyclability of the material.

In an embodiment, the whole artificial turf, be it knitted, woven or tufted, comprises the monofilament according to the present application in any of its component. polyolefin polymers as the only polymeric component. In an embodiment, the polyolefin polymer is polyethylene, polypropylene, copolymers of ethylene and propylene or any mixture of these. This provides the artificial turf with a significantly improved life-cycle assessment as it does not have to be separated into different components prior to melting.

In an embodiment, the monofilament according to the present application may be comprised in any part of the artificial turf according to the application, namely may it be used to tuft the primary backing. Furthermore, it may be comprised in the primary backing and/or in the secondary backing. The primary backing and/or the secondary backing may e.g. be woven fabric, knitted fabrics or nonwoven fabrics comprising the monofilament according to the present application.

The present application furthermore pertains to a process for manufacturing an artificial turf monofilament comprising the steps of providing end-of-life artificial turf material of polyolefins, cleaning the end-of-life artificial turf material to obtain cleaned end-of life artificial turf material, melting the cleaned end-of-life artificial turf material to get a recycled polyolefin melt, filtering the recycled polyolefin melt at least one time to obtain a filtered polyolefin, providing the filtered polyolefin to a first extruder, providing virgin polyolefin, providing the virgin polyolefin melt to a second extruder, extruding the filtered polyolefin melt and the virgin polyolefin melt through a spinneret in such a manner that the filtered polyolefin melt forms the core of a monofilament while the virgin polyolefin melt forms the sheath of a monofilament.

If not stated otherwise all terms which have been defined for other aspects of the present application are also valid for this aspect.

An end-of-life artificial turf material is an artificial turf or components thereof that has been removed from the ground as it can no longer fulfill its purpose e.g. for the reason of wear. Removed artificial turf is plastic waste and in many countries there are legal provisions that require recycling of such waste. If the end-of-life artificial turf comprises other polymeric materials in addition to polyolefins the other polymeric materials have to be removed e.g. by mechanical separation.

For the ease of handling, the polyolefin component of the end-of-life artificial turf may be ground e.g. using mills or moving knifes in order to obtain pieces which can be handled e.g. by conveyor belts or suction excavators. Grinding of the artificial turf also offers the possibility to remove soiling from the material, especially infill material but also gravel, sand or dirt which may be removed by dry techniques such as sieving or air classification as well as wet techniques such as washing of flotation depending on the kind of soiling to be removed. Wet techniques may use water and any other suitable liquid depending on the cleaning performance and/or the density. Especially water may also be added with auxiliary substances such as detergents to improve the efficiency of the cleaning.

The skilled person knows that all mentioned wet and dry techniques may be combined in any manner that is necessary and that e.g. air classification may be combined with drying after washing or that dry techniques may be carried out prior to wet techniques.

The cleaned end-of-life artificial turf material may be dried if necessary.

The cleaned end-of-life artificial turf material is melted by heating above its melting point in order to obtain a recycled polyolefin melt.

The recycled polyolefin melt may still comprise unwanted materials such as dirt, sand, gravel or leftovers of the infill that have not been removed in the cleaning step. Furthermore, the recycled polyethylene melt may comprise unwanted parts such as powders and/or particles that had been embedded into the polymeric material and which thus could not be removed in the cleaning process. These unwanted parts are removed from the recycled polymer melt by filtering. Filtering can be carried out by all technologies known to the person skilled in the art such as filtration of the melted material over metal filters.

The filtered polyolefin melt is provided to a first extruder as solid granulates for melting.

Virgin polyolefin polymer is melted via a second extruder.

The two polymer melts are then pressed from the two extruders through a spinneret in such a manner that upon cooling of the melt, a monofilament is formed wherein the virgin polymer forms the sheath and the recycled polymer forms the core.

In an embodiment, extrusion of the recycled polymer melt and the virgin polymer is carried out at different temperatures. In an embodiment, the temperature of the recycled polymer melt is at least 10°C higher than the temperature of the virgin polymer melt in order to delay crystallization of the melt during cooling. Due to the delayed crystallization, adhesion between the core and the sheath is improved as the polymeric chains of the two different melts have time to intermingle with each other.

In an embodiment, the monofilament is drawn after the spinning process. Drawing may be carried out immediately after the monofilament leaves the spinneret or the monofilament may first be wound e.g. on a bobbin and drawn in a subsequent-For drawing any techniques known to the person skilled in the art may be used such as use of drawing godets, use of drawing godets with internal heaters, heating of the monofilament in ovens or warming baths.

In an embodiment, the after filtering, the recycled polyolefin melt is granulated, e.g. using an extruder. In such case, the filtering of the polymer and the processing to the core of the monofilament according to the present application can be carried out in separate steps. This is especially advantageous when extensive filtering processes are to be carried out, e.g. on heavily soiled end-of-life materials such as end-of-life artificial turf. In this case larger facilities may be used which are separate from the facilities for spinning the monofilament.

### Figures

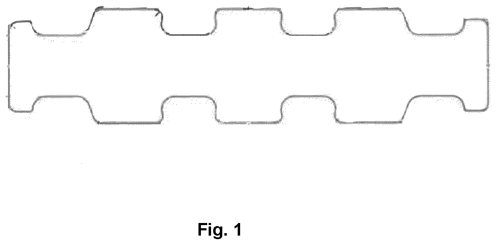

Fig. 1 shows an example for the cross section of an artificial turf monofilament according to the present application. The cross section is essentially rectangular and comprises indentations which increase the adhesion between the core and the sheath.

## Claims

1. Artificial turf monofilament comprising
• a sheath comprising a virgin polyolefin polymer,
• a core comprising recycled polyolefin polymer obtained from recycled artificial turf.

2. Artificial turf monofilament according to claim 1 wherein the polyolefin polymer in the sheath is polyethylene or polypropylene

3. Artificial turf monofilament according to claim 1 or 2 wherein the recycled polyolefin polymer comprises polyethylene, polypropylene or a mixture thereof.

4. Artificial turf monofilament according to any one or more of the previous claims wherein the core comprises recycled polyolefin polymer as the only polymeric component.

5. Artificial turf monofilament according to any one or more of the previous claims wherein the core comprises UV-protective additives, anti-oxidants, pigments, colorants or any mixture thereof.

6. Artificial turf monofilament according to claim 5 wherein one of the pigments is chalk or a white pigment.

7. Artificial turf monofilament according to any one or more of the previous claims wherein the core has a corrugated shape.

8. Artificial turf comprising a monofilament according any one or more of the previous claims.

9. Process for manufacturing an artificial turf monofilament comprising the steps of
a) Providing end-of-life artificial turf material of polyolefins,
b) Cleaning the end-of-life artificial turf material to obtain cleaned end-of life artificial turf material,
c) Melting the cleaned end-of-life artificial turf material to get a recycled polyolefin melt,
d) Filtering the recycled polyolefin melt at least one time to obtain a filtered polyolefin
e) Providing the filtered polyolefin to a first extruder,
f) Providing virgin polyolefin,
g) Providing the virgin polyolefin melt to a second extruder,
h) Extruding the filtered polyolefin melt and the virgin polyolefin melt through a spinneret in such a manner that the filtered polyolefin melt forms the core of a monofilament while the virgin polyolefin melt forms the sheath of a monofilament.

10. The process of claim 9 wherein the process additionally comprises a crystallization step.

11. The process of claim 9 or 10 wherein the yarn is drawn after extruding.

12. The process of any one or more of claims 9 to 11 wherein in between steps d) and e), the filtered polyolefin is granulated.
